# EUROPEAN PATENT SPECIFICATION

(11) **EP 3 075 578 B1**
(45) Date of publication and mention of the grant of the patent: **26.06.2019**
(21) Application number: 14864676.3
(22) Date of filing: 24.02.2014
(51) Int. Cl.: B60D 1/48, B60R 19/48, B60D 1/56

(54) **TOWING PIPE ASSEMBLY**
SCHLEPPROHRANORDNUNG
ENSEMBLE DE BARRE DE REMORQUAGE

(30) Priority: 20.11.2013 KR 20130141159
(43) Date of publication of application: 05.10.2016
(73) Proprietor: Hanwha Advanced Materials Corporation, Sejong-si 30077 (KR)
(72) Inventor: LEE, Sang Joon, Sejong-si 30077 (KR); LIM, Joung Myung, Sejong-si 30077 (KR)
(74) Representative: SSM Sandmair
(86) International application number: PCT/KR2014/001467
(87) International publication number: WO 2015/076458

(56) References cited:
- WO-A1-2012/158411
- FR-A1- 2 909 948
- JP-A- 2003 002 136
- JP-A- 2004 338 666
- JP-A- 2005 186 846
- JP-A- 2005 186 846
- KR-A- 20080 027 520

## Description

### [Technical Field]

The present invention relates to a towing pipe assembly, and more particularly, to an improved towing pipe assembly which fastens a towing pipe of different materials to be inserted and fixed to a bumper beam without using any mold, thereby reducing the number of components and reducing work expenses by mounting the towing pipe in a direct fastening manner without welding.

### [Background Art]

In general, a towing device for a vehicle is a device for towing a vehicle by connecting a cable to a vehicle body or connecting a trailer or a carrier to a vehicle body when a vehicle is recovered or towed. Particularly, a towing device for the purpose of towing a car includes a towing pipe fixed to a bumper beam and a towing hook joined to the towing pipe.

Korean Patent publication No. 2013-0070360 and 2011-0058469 and Korean Patent No. 0802739 disclose technologies related with such a towing pipe.

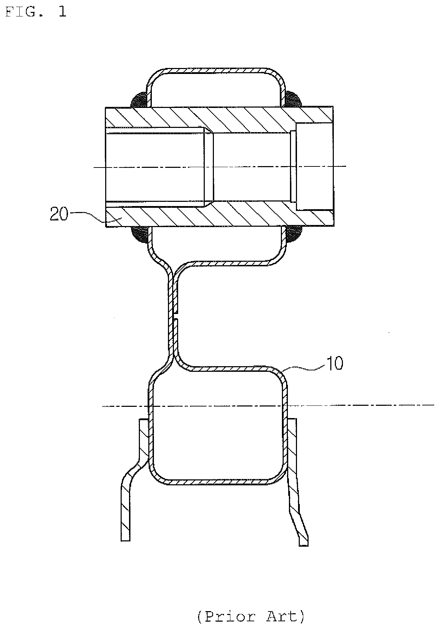

However, as shown in FIG. 1, in the prior arts, a towing pipe 20 can be easily fixed and mounted to a bumper beam 10 when the outer circumferential surface of the towing pipe 20 is welded after the towing pipe 20 passes through the bumper beam 10 because the bumper beam 10 is made of steel.

However, recently, in order to make vehicles lightweight for the vehicles that get better mileage, because the bumper beam 10 is made of resin, such as glass fiber reinforced thermoplastic resin, for instance, GMT, LFT and so on, there is a limitation in that the towing pipe cannot be welded to the bumper beam.

In other words, because the towing pipe 20 which is made of steel cannot be welded to the bumper beam 10 which is made of resin, the towing pipe 20 needs an additional bracket (not shown) capable of being welded, and the bracket is fastened and fixed to the bumper beam 10.

The document FR 2 909 948 A relates to vehicle structure comprising a means for absorbing energy and a means for transmitting energy impacts, said latter means being composed of at least one transversal element and one longitudinal element.

The document JP 2005-186,846 A, with the intention to provide a detachable towing hook mounting structure to/from a bumper reinforcement so that the predetermined towing load can be received, and the original shock-absorbing function of the bumper reinforcement that the bumper reinforcement is squeezed in a collision is not impaired, relates to a towing hook mounting bracket which is inserted from an opening of a front wall of a bumper reinforcement before a flange part is abutted on a facing side, and a flanged bolt is inserted from a back side of the bumper reinforcement through an opening of a rear wall of the bumper reinforcement, and then, the flanged bolt is screwed to a screw hole of the towing hook mounting bracket, and the towing hook mounting bracket is fastened only to the bumper reinforcement from the outside between the flange part and a flange part of the flanged bolt.

Accordingly, the prior arts have several disadvantages in that the structure for mounting the towing pipe 20 becomes complicated to cause an increase of the number of processes, in that it is necessary to use a mold for manufacturing the bracket having a complex shape, and in that the structure of the bracket also becomes complicated to satisfy the pull & push test and the shipping test which are tests for estimating characteristics of the towing pipe 20 and it causes an increase of manufacturing costs.

### [Disclosure]

### [Technical Problem]

Accordingly, the present invention has been made in an effort to solve the above-mentioned problems occurring in the prior arts, and it is an object of the present invention to provide a towing pipe assembly which can simplify the fastening structure between a towing pipe made of steel and a bumper beam made of resin, enhance fastening force, reduce the number of fastening processes and reduce expenses.

### [Technical Solution]

To achieve the above objects, the present invention provides a towing pipe assembly including: a bumper beam having a towing pipe mounting hole; a towing pipe which is fit into the towing pipe mounting hole after passing through the towing pipe mounting hole and has a flange formed at one end to be caught to the front end of the towing pipe mounting hole and a fastening screw formed on the inner circumferential surface of the other end; and a towing nut which has a protruding ring formed on one side and a nut screw formed on the outer circumferential surface of the protruding ring to be screw-coupled with the fastening screw and comes into close contact with the bumper beam, wherein
the bumper beam further includes an anti-rotation key formed on a part of the inner circumferential surface of the towing pipe mounting hole in an angled form, and the towing pipe further includes an anti-rotation protrusion formed on the outer circumferential surface thereof to be inserted, caught and fixed to the anti-rotation key.

Furthermore, the towing pipe and the towing nut are made of steel and are assembled to each other in a bolt-nut type.

### [Advantageous Effects]

As described above, the towing pipe assembly according to the present invention can simplify the fastening structure between a towing pipe made of steel and a bumper beam made of resin, enhance fastening force, reduce the number of fastening processes and reduce expenses.

### [Description of Drawings]

FIG. 1 is a partially sectional view showing an exemplary fastening structure of a towing pipe according to a prior art.
FIG. 2 is a view of a fastening state of a towing pipe assembly according to a preferred embodiment of the present invention.
FIG. 3 is a view showing components of the towing pipe assembly according to the preferred embodiment of the present invention.
FIG. 4 is a partially sectional view showing a fastened state of the towing pipe assembly according to the preferred embodiment of the present invention.

### [Mode for Invention]

Hereinafter, reference will be now made in detail to the preferred embodiment of the present invention with reference to the attached drawings.

Descriptions of specific structures or functions are just exemplified to describe example embodiments according to the idea of the present invention, and example embodiments according to the idea of the present invention may be made in various forms. It should be understood, however, that there is no intent to limit example embodiments of the present invention to the particular embodiments described in this specification.

The preferred embodiments of the present invention are capable of various modifications and alternative forms, and particular embodiments of the present invention will be illustrated in the attached drawings and described in this specification in detail. It should be understood, however, that there is no intent to limit embodiments of the invention to the particular forms disclosed, but on the contrary, embodiments of the invention are to cover all modifications, equivalents, and alternatives falling within the technical idea and scope of the present invention.

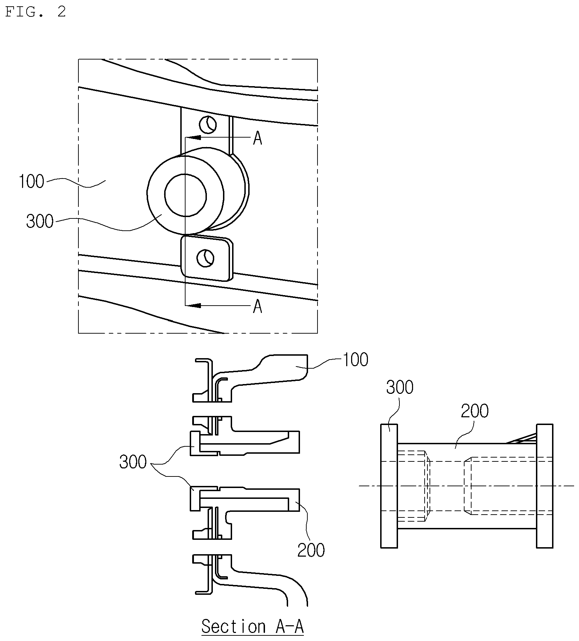

As shown in FIGS. 2 to 4, a towing pipe assembly according to a preferred embodiment of the present invention includes: a bumper beam 100 made of resin; a towing pipe 200 fixed to the bumper beam 100 after passing through the bumper beam 100; and a towing nut 300 for fastening and fixing the towing pipe 200, wherein the towing pipe 200 is fastened to the bumper beam 100 in a simple screw-coupling manner without welding.

In this instance, the front bumper beam shown in FIG. 2 is just illustrated by an example, and of course, a rear bumper beam may have the same structure as the front bumper beam.

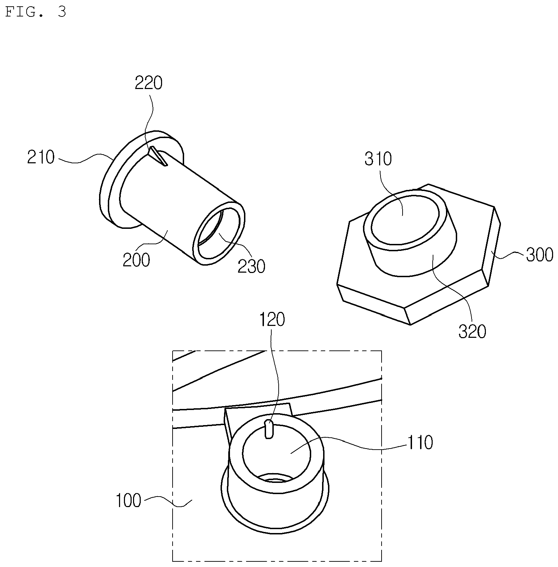

For this, as shown in FIG. 3, an anti-rotation key 120 is inwardly formed at a part of the inner circumferential surface of a towing pipe mounting hole 110 formed in the bumper beam 100.

In this instance, the anti-rotation key 120 is formed in an angled form, for instance, in a rectangular form, to have a retaining structure, so that the towing pipe 200 which is inserted into the towing pipe mounting hole 110 is not rotated by key-binding.

In the meantime, the towing pipe 200 has an anti-rotation protrusion 220 which protrudes from a part of the outer circumferential surface of the towing pipe 200 so as to be inserted into the anti-rotation key 120.

Moreover, the towing pipe 200 has a flange 210 formed at one end thereof so that the towing pipe 200 passing through the towing pipe mounting hole 110 can be caught to the bumper beam 100 without separation. Preferably, the anti-rotation protrusion 220 is formed below the flange 210.

Furthermore, not shown in the drawings, but the towing pipe 200 has a towing hook fixed thereto so that a rope can be caught to the towing hook when a vehicle is towed.

Additionally, the towing pipe has a fastening screw 230 formed on the inner circumferential surface of the other end thereof.

In addition, the towing nut 300 is fastened to the fastening screw 230, and for this, the towing nut 300 has a protruding ring 310 formed on one side thereof, and a nut screw 320 formed on the outer circumferential surface of the protruding ring 310 to be screw-coupled with the fastening screw 230.

In this instance, the towing pipe 200 and the towing nut 300 are all made of steel and are coupled to each other in a bolt-nut fastening way.

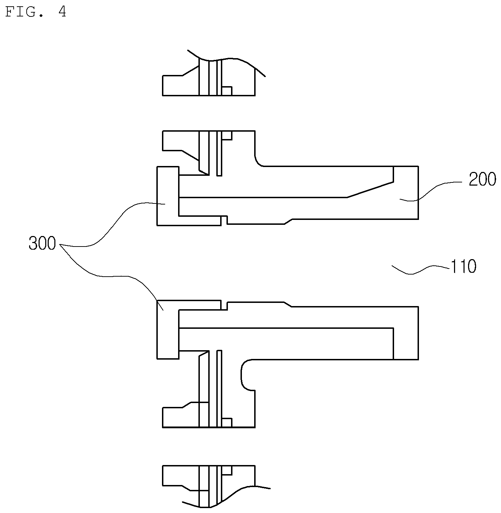

The towing pipe assembly according to the preferred embodiment of the present invention having the above-mentioned structure may be fastened and fixed as shown in FIG. 4.

For instance, as shown in FIG. 4, first, the end portion of the towing pipe 200 where the fastening screw 230 is formed is inserted into the towing pipe mounting hole 100.

Next, when the towing pipe 200 is rotated, the anti-rotation protrusion 220 formed on the outer circumferential surface of the towing pipe 200 is fit to the anti-rotation key 120 formed on the inner circumferential surface of the towing pipe mounting hole 110 to be located to engage with each other.

Then, the towing pipe 200 is fit to the towing pipe mounting hole 110 in an anti-rotation state, and the flange 210 of the towing pipe 200 comes into close contact with the cross section of the towing pipe mounting hole 110 to be supported.

In the above state, the protruding ring 310 of the towing nut 300 is inserted into the inner diameter of the front end of the towing pipe 200, and then, the fastening screw 230 and the nut screw 320 formed on the outer circumferential surface of the protruding ring 310 are firmly tightened so as to be screw-coupled with each other.

In this instance, the towing nut 300 abuts on the bumper beam 100 to be in close contact with each other.

Particularly, the towing nut 300 can be manufactured easily and inexpensively because its structure is simple.

Therefore, because the towing pipe 200 is completely fastened with the towing nut 300 in a state where the bumper beam 100 is interposed between the towing pipe 200 and the towing nut 300 as shown in FIG. 4, the towing pipe assembly according to the present invention can keep firm fixation, reduce the number of processes and the manufacturing costs because the fastening work is easy and fast.

## Claims

1. A towing pipe assembly comprising:
a bumper beam (100) including a towing pipe mounting hole (110);
a towing pipe (200) having a flange (210) formed at one end to be caught to the front end of the towing pipe mounting hole (110) and a fastening screw (220) formed on the inner circumferential surface of the other end; and
a towing nut (300) including a protruding ring (310) formed on one side and a nut screw (320) formed on the outer circumferential surface of the protruding ring (310) to be screw-coupled with the fastening screw (220), the towing nut (300) coming into close contact with the bumper beam (100);
**characterized in that** the towing pipe (200) is fitted through the towing pipe mounting hole (110) and **in that** the bumper beam (100) further includes an anti-rotation key (120) formed on a part of the inner circumferential surface of the towing pipe mounting hole (110) in an angled form, and the towing pipe (200) further includes an anti-rotation protrusion (220) formed on the outer circumferential surface thereof to be inserted, caught and fixed to the anti-rotation key (120).

## Patentansprüche

1. Schlepprohranordnung, die umfasst:
einen Stoßfängerträger (100) mit einem Schlepprohrmontageloch (110);
ein Schlepprohr (200) mit einem Flansch (210), der an einem Ende so ausgebildet ist, dass er am vorderen Ende des Schlepprohrmontagelochs (110) erfasst wird, und eine Befestigungsschraube (220), die an der inneren Umfangsfläche des anderen Endes ausgebildet ist; und
eine Schleppmutter (300) mit einem an einer Seite ausgebildeten vorstehenden Ring (310) und einer auf der äußeren Umfangsfläche des vorstehenden Rings (310) ausgebildeten Schraubmutter (320), die mit der Befestigungsschraube (220) zu verschrauben ist, wobei die Schleppmutter (300) mit dem Stoßfängerträger (100) in engen Kontakt kommt;
**dadurch gekennzeichnet, dass** das Schlepprohr (200) durch das Schlepprohrmontageloch (110) eingepasst wird und dass der Stoßfängerträger (100) des Weiteren einen Antirotationsschlüssel (120) aufweist, der an einem Teil der inneren Umfangsfläche der Schlepprohrmontagelochs (110) in einer abgewinkelten Form ausgebildet ist, und das Schlepprohr (200) des Weiteren einen Antirotationsvorsprung (220) aufweist, der an der äußeren Umfangsfläche davon ausgebildet ist, so dass er an dem Antirotationsschlüssel (120) eingesetzt, erfasst und fixiert wird.

## Revendications

1. Ensemble de barre de remorquage comportant :
une poutre de pare-chocs (100) comprenant un trou de montage de barre de remorquage (110) ;
la barre de remorquage (200) comprenant une bride (210) formée à une extrémité pour être retenue à l'extrémité avant du trou de montage de barre de remorquage (110) et une vis de fixation (220) formée sur la surface circonférentielle intérieure de l'autre extrémité ;
et un écrou de remorquage (300) comprenant un anneau saillant (310) formé sur un côté et une vis d'écrou (320) formée sur la surface circonférentielle extérieure de l'anneau saillant (310) de manière à être vissée sur la vis de fixation (220), l'écrou de remorquage (300) entrant en contact rapproché avec la poutre de pare-chocs (100) ;
**caractérisé en ce que** la barre de remorquage (200) est insérée à travers le trou de montage de barre de remorquage (110) et **en ce que** la poutre de pare-chocs (100) comprend en outre une clé anti-rotation (120) formée en forme d'angle sur une partie de la surface circonférentielle intérieure du trou de montage de barre de remorquage (110), et la barre de remorquage (200) comprend en outre une saillie anti-rotation (220) formée sur sa surface circonférentielle extérieure de manière à être insérée, retenue et fixée sur la clé anti-rotation (120).
